# EUROPÄISCHE PATENTSCHRIFT

(11) **EP 3 891 031 B1**
(45) Veröffentlichungstag und Bekanntmachung des Hinweises auf die Patenterteilung: **08.01.2025**
(21) Anmeldenummer: 19812761.5
(22) Anmeldetag: 27.11.2019
(51) Int. Cl.: B60W 10/22, B60W 30/02, B60W 40/02, B60G 17/016, B60W 40/06

(54) **VERFAHREN ZUM ERMITTELN EINES FAHRBAHNPROFILS**
METHOD FOR DETERMINING A ROADWAY PROFILE
PROCÉDÉ POUR DÉTERMINER UN PROFIL DE CHAUSSÉE

(30) Priorität: 05.12.2018 DE 102018221062
(43) Veröffentlichungstag der Anmeldung: 13.10.2021
(73) Patentinhaber: VOLKSWAGEN AKTIENGESELLSCHAFT, 38440 Wolfsburg (DE)
(72) Erfinder: BÄRECKE, Frank, 38444 Wolfsburg (DE)
(86) Internationale Anmeldenummer: PCT/EP2019/082718
(87) Internationale Veröffentlichungsnummer: WO 2020/114854

(56) Entgegenhaltungen:
- EP-A1- 3 312 029
- DE-A1- 102005 051 141
- DE-A1- 102012 022 367
- DE-T5- 112012 006 147

## Beschreibung

Heutige Fahrzeuge verfügen bereits über eine Vielzahl von Assistenzsystemen, die den Fahrer in einer Vielzahl von Fahrsituationen computerbasiert unterstützen. Solche Assistenzsysteme können auf Sensoren zum Erfassen einer Vielzahl von Messdaten zurückgreifen, welche die Sinnesfähigkeiten des Menschen bei weitem übersteigen. Zudem übertrifft die Geschwindigkeit dieser Assistenzsysteme die menschliche Reaktionszeit signifikant. Bekannte Fahrerassistenzsysteme sind beispielsweise Spurhalteassistenten, Bremsassistenten bei Fußgängererkennung und Abstandsregeltempomaten, insbesondere für Stausituationen.

Darüber hinaus sind aus dem Stand der Technik Verfahren und Systeme zum Anpassen von Fahrwerkseigenschaften eines Fahrzeugs bekannt. Dabei ist zugleich Sicherheitsaspekten, beispielsweise durch Kontrolle der Radaufstandskräfte, sowie dem Komfort des Nutzers, insbesondere durch die Dämpfung von Fahrbahnunebenheiten, Rechnung zu tragen. Die Anpassung von Fahrwerkseigenschaften erfolgt in der Regel durch Anpassung der Dämpfer.

Dämpfersysteme lassen sich im Wesentlichen in drei Gruppen einteilen, nämlich passive, aktive und semiaktive Dämpfersysteme. Passive Dämpfersysteme sind dabei nur einmalig durch Auswahl der Komponenten des Dämpfersystems, insbesondere Federn und Dämpfer, an ein zu erwartendes Fahrbahn- beziehungsweise Streckenprofil anpassbar. Bei aktiven Dämpfersystemen sind Bauteile wie Federn und Dämpfer durch Aktoren ersetzt, welche die sonst von diesen passiven Bauteilen aufgebrachten Kräfte erzeugen. Semiaktive Dämpfersysteme verwenden hingegen weiterhin Federn und Dämpfer, jedoch sind die Dämpferkennlinien mittels geeigneter Ansteuerung über weite Bereiche veränderbar.

Semiaktive Dämpfersysteme basieren beispielsweise darauf, dass der Fluss des im Dämpfer eingesetzten Fluides angepasst wird. Dies erfolgt beispielsweise indem der von dem Fluid erfahrene Strömungswiderstand mittels (proportionaler) Verstellventile angepasst wird. Ebenfalls bevorzugt, werden die rheologischen Eigenschaften des eingesetzten Fluides selbst angepasst. Dies kann bei magneto- oder elektrorheologischen Fluiden durch Anlegen eines geeigneten elektromagnetischen Felds erfolgen. Das externe Anpassen des Strömungswiderstands kann ferner mit der Manipulation der Fluidviskosität kombiniert werden.

Bei der Verwendung semiaktiver Dämpfersysteme stellt sich zwangsläufig die Frage, anhand welcher Eingangsgrößen eine Steuerung oder Regelung dieser Dämpfersysteme erfolgt. Bei der Verwendung allein von durch die fahrzeugeigene Sensorik bereitgestellten Eingangsgrößen, ist nachteilig in Kauf zu nehmen, dass eine Anpassung der Dämpfung einer Änderung eines Fahrbahnprofils zeitlich stets nachgeht. Dies hat sowohl Sicherheits- als auch Komforteinbußen für den Nutzer zur Folge. Aus dem Stand der Technik sind daher bereits Verfahren bekannt, bei denen zur Dämpferregelung auch auf fahrzeugexterne Informationsquellen zugegriffen wird.

Die DE 10 2015 005 964 A1 offenbart ein Verfahren, bei dem eine Anpassung von Dämpfereigenschaften anhand eines von einer fahrzeugexternen Datenquelle empfangenen Parameters erfolgt. Die Datenquelle ist dabei ein anderes Fahrzeug von dem der Parameter mittels Car2Car-Kommunikation empfangen wird. Alternativ handelt es sich bei der Datenquelle um eine Datenbank von der ein Parameter mittels Drahtloskommunikation empfangen wird.

Ein ähnliches Verfahren zum vorausschauenden Adaptieren einer Fahrwerkskomponente ist in der DE 10 2013 210 553 A1 offenbart. Auch dabei wird eine Fahrbahnbeschaffenheitsinformation von einem weiteren Kraftfahrzeug oder einem Datenserver empfangen. In beiden Verfahren kann zusätzlich fahrzeugeigene Sensorik zum Erzeugen von Eingangssignalen für die adaptive Dämpferregelung genutzt werden. In begrenztem Maß ist dabei auch mit der fahrzeugeigenen Sensorik eine vorausschauende Erfassung der Fahrbahneigenschaften möglich, die prinzipiell zur vorausschauenden Anpassung der Eigenschaften eines Dämpfersystems nutzbar ist.

In den aus dem Stand der Technik bekannten Verfahren wird die vorausschauende Adaptation der Dämpfer zum Teil von dem Empfang externer Daten abhängig gemacht. Dadurch können sich nachteilig sowohl das Fehlen einer Datenverbindung ausreichender Bandbreite als auch das Fehlen geeigneter externer Daten nachteilig auf die Dämpferanpassung auswirken. Bislang ist hinsichtlich dieser auf Car2Car- oder Car2X-Kommunikation basierenden Lösungen der Zielkonflikt von notwendiger Datenrate und Auflösung nicht gelöst. Ferner ist die Verfügbarkeit inhaltlich oder formell geeigneter externer Daten bislang nicht sichergestellt.

Die Verwendung fahrzeugeigener Sensorik zur vorausschauenden Detektion der Fahrbahneigenschaften, beispielsweise durch die Verwendung von Außenkameras eines Fahrzeugs, liefert nachteilig nicht in allen Situationen eine ausreichende Datenbasis. So ist insbesondere Nachts, bei direktem Gegenlicht oder bei einem dichtvorausfahrenden Fahrzeug die sensorische Erfassbarkeit der Fahrbahneigenschaften stark eingeschränkt.

DE 10 2012 022 367 A1 offenbart eine Regelung und/oder Steuerung einer Dämpfungs- und/oder Stabilisierungsvorrichtung eines Kraftfahrzeugs.

DE 10 2005 051 141 A1 offenbart ein Regelungsverfahren für ein elektronisch regelbares Dämpfungssystem in Fahrzeugen und ein elektronisch regelbares Dämpfungssystem.

EP 3 312 029 A1 offenbart ein Verfahren zum Betreiben eines Fahrzeugs und ein Fahrzeug.

Der Erfindung liegt nun die Aufgabe zugrunde, den Stand der Technik zu bereichern und ein Verfahren zum Ermitteln eines Fahrbahnprofils bereitzustellen, das unabhängig von der Verfügbarkeit von Car2Car- und Car2X-Kommunikation sowie in zahlreichen Anwendungsfällen für die Anpassung von Dämpfersystemen genutzt werden kann.

Die Aufgabe der Erfindung wird gelöst durch die Merkmale der unabhängigen Patentansprüche. Bevorzugte Weiterbildungen sind Gegenstand der jeweils rückbezogenen Patentansprüche.

Ein erster Aspekt der Erfindung betrifft ein von einem Kraftfahrzeug durchgeführtes Verfahren zum Ermitteln eines Fahrbahnprofils. Hierbei wird unter einem Fahrbahnprofil eine Information über einen vertikalen Verlauf einer Fahrbahn, insbesondere über einen Höhenschnitt, einer Fahrbahn, verstanden. Im Rahmen der vorliegenden Erfindung betrifft das Fahrbahnprofil dabei die gesamte Breite der Fahrbahn oder nur einen Teil der Breite der Fahrbahn. Bevorzugt betrifft das Fahrbahnprofil eine Fahrzeugspur, insbesondere eine Fahrzeugspur eines vierrädrigen, zweiachsigen Kraftfahrzeugs, wie im folgenden noch im Detail beschrieben wird.

Im erfindungsgemäßen Verfahren erfolgt zunächst das Erkennen eines auf der Fahrspur des Kraftfahrzeugs vorausfahrenden Fahrzeugs. Unter Fahrspur wird in diesem Zusammenhang die Spur einer ein- oder mehrspurigen Straße verstanden. Das Erkennen des vorausfahrenden Fahrzeugs erfolgt bevorzugt sensorgestützt, bevorzugt mittels zumindest eines zum Erfassen eines Umgebungssignals des Kraftfahrzeugs ausgebildeten ersten Sensors des Kraftfahrzeugs. Beispielsweise erfolgt das Erkennen eines vorausfahrenden Fahrzeugs in einem von dem Kraftfahrzeug aufgenommenen Kamerabild. Ebenfalls bevorzugt wird das vorausfahrende Fahrzeug mittels eines Lidar-,Radar- oder Ultraschallsensors erfasst und gegebenenfalls unter Verwendung eines von einer Steuereinheit durchgeführten geeigneten Algorithmus erkannt.

Ebenfalls bevorzugt erfolgt das Erkennen des vorausfahrenden Fahrzeugs kommunikationsbasiert durch Car2Car-Kommunikation zwischen dem Kraftfahrzeug und dem vorausfahrenden Fahrzeug. Diese Car2Car-Kommunikation erfolgt bevorzugt mittels Mobilfunk, Bluetooth oder WLAN und ist gegebenenfalls durch eine Basisstation vermittelt. Das Erkennen des vorausfahrenden Fahrzeugs umfasst zumindest das Erkennen, dass ein gleichartiges Fahrzeug, bevorzugt mit gleicher Rad- und/oder Spuranzahl und bevorzugt der gleichen Fahrzeugkategorie, also PKW, LKW, Transporter, Minibus, etc., vorausfährt.

In einem weiteren Schritt des erfindungsgemäßen Verfahrens wird die Trajektorie zumindest eines Fixpunkts des vorausfahrenden Fahrzeugs erfasst. Das Erfassen erfolgt dabei mit einem geeigneten Sensor, beispielsweise einem bildgebenden Sensor, des Kraftfahrzeugs. Die Art des Fixpunkts ist dabei bevorzugt voreingestellt, besonderes bevorzugt handelt es sich um Leuchtelemente oder Kantenelemente des Fahrzeugs. Ebenfalls bevorzugt handelt es sich bei dem Fixpunkt um ein Nummernschild oder einen Auspuff des vorausfahrenden Fahrzeugs. Letztere haben die Vorteile, dass Nummernschilder gegebenenfalls ohnehin erfasst werden (DashCam) beziehungsweise dass Auspuffe im Infrarotbereich sicher lokalisierbar sind.

Unter Trajektorie wird im Rahmen der vorliegenden Anmeldung eine Zeitreihe von Positionen des erfassten Fixpunkts verstanden. Bei den Koordinaten kann es sich um absolute oder relative Koordinaten, beispielsweise vom Beginn einer Erfassung an, handeln. Die Koordinaten beziehen sich bevorzugt auf ein im Verfahren angenommenes festes Bezugssystem. Die Trajektorie gibt somit für ein bestimmtes Bezugssystem für jeden erfassten Moment zumindest eine Koordinate des Fixpunkts an. Bei der zumindest einen Koordinate handelt es sich um eine Z-koordinate, bevorzugt um X-,Z- Koordinaten, besonders bevorzugt um X-,Y-,Z-Koordinaten. Die Trajektorie des zumindest einen Fixpunkts bildet somit die Bewegung, insbesondere die Vertikalbewegung, des Fixpunkts während der Erfassung des Fixpunkts nach.

Im erfindungsgemäßen Verfahren erfolgt ferner eine Auswahl eines inversen Fahrzeugmodells anhand des erkannten vorausfahrenden Fahrzeugs. Bevorzugt umfasst das Erkennen des vorausfahrenden Fahrzeugs dabei das Erkennen eines Fabrikats und gegebenenfalls eines Modells des vorausfahrenden Fahrzeugs. Alternativ umfasst das Erkennen das Erkennen eines Typs des vorausfahrenden Fahrzeugs, wie beispielsweise Limousine, SUV, Coupe oder dergleichen. Anhand des ermittelten konkreten oder typisierten Fahrzeugtyps wird anschließend ein passendes inverses Fahrzeugmodell ausgewählt. Die Auswahl erfolgt dabei bevorzugt aus einer Datenbank des Kraftfahrzeugs, insbesondere bei typen-basierten inversen Fahrzeugmodellen. Alternativ erfolgt die Auswahl über eine Datenverbindung zu einem Server eines Dienstanbieters. Diese Durchführungsform ermöglicht eine präzisere Vorhersage des Fahrbahnprofils mittels der Auswahl eines besonders passenden inversen Fahrzeugmodells.

Gemäß dem erfindungsgemäßen Verfahren wird die Trajektorie des zumindest einen Fixpunkts als Eingangsgröße für das inverse Fahrzeugmodell verwendet. Das inverse Fahrzeugmodell bildet dabei einen mathematischen Rahmen für die Abbildung einer Bewegung des Fahrzeugmodells in Reaktion auf die Oberflächenbeschaffenheit einer modellierten, von dem Fahrzeugmodell befahrenen Oberfläche. Mit anderen Worten handelt es sich um das Inverse eines Fahrzeugmodells zum Modellieren einer Fahrzeugreaktion auf das Befahren verschiedener Untergründe. Derartige Fahrzeugmodelle sind dem Fachmann aus dem Stand der Technik bekannt, wie beispielsweise das Modell eines Zwei-Massen Schwingers. Das Invertieren eines solchen Fahrzeugmodells stellt unter Berücksichtigung gegebener Randbedingungen eine einfache Programmieraufgabe dar.

Mit anderen Worten wird im erfindungsgemäßen Verfahren anhand einer erfassten Trajektorie eines Fixpunkts eines vorausfahrenden Fahrzeugs als Eingangssignal mittels eines vereinfachten inversen Fahrzeugmodells ein Ausgangssignal ermittelt, dass einem modellierten Fahrbahnhöhenprofil entspricht. Das modellierte Fahrbahnhöhenprofil ist dabei derart, dass es beim Überfahren durch das Fahrzeugmodell für einen Fixpunkt des Fahrzeugmodells die erfasste Trajektorie reproduziert. Unter der Annahme, dass es sich bei dem vorausfahrenden Fahrzeug um das Fahrzeugmodell handelt, entspricht das modellierte Fahrbahnhöhenprofil somit in Näherung dem tatsächlich vor dem Kraftfahrzeug liegenden Fahrbahnhöhenprofil. Im erfindungsgemäßen Verfahren wird somit näherungsweise ein tatsächlich vor dem Kraftfahrzeug liegendes Fahrbahnhöhenprofil bestimmt. Dieses Fahrbahnhöhenprofil kann vom Fahrzeug vorteilhaft gespeichert, übertragen oder, wie im folgenden im Detail beschrieben, vorteilhaft für die Anpassung eines adaptiven Dämpfersystems verwendet werden. Das erfindungsgemäße Verfahren kann dabei vorteilhaft unter Rückgriff auf die in modernen Fahrzeugen ohnehin schon vorhandene Sensorik durchgeführt werden. Besonders bevorzugt sind zum Durchführen des erfindungsgemäßen Verfahrens lediglich eine Frontkamera, ggf. ein Frontabstandssensor und eine entsprechend ausgestaltete Steuereinheit notwendig.

Im erfindungsgemäßen Verfahren wird ferner ein horizontaler Abstand zu dem vorausfahrenden Fahrzeug erfasst und/oder ermittelt. Gemäß einer Durchführungsform wird der horizontale Abstand mittels zumindest eines zum Erfassen einer Zustandsinformation des Kraftfahrzeugs ausgebildeten zweiten Sensors des Kraftfahrzeugs erfasst. Beispielsweise wird der horizontale Abstand mittels eines Abstandssensors, beispielsweise einem Lidar-, Radar- oder Ultraschallsensor erfasst beziehungsweise ermittelt. Gemäß einer anderen Durchführungsform wird der horizontale Abstand anhand eines Kamerabildes des vorausfahrenden Fahrzeugs ermittelt, beispielsweise indem die Größe eines Referenzobjekts, beispielsweise eines Nummernschilds, in dem Kamerabild ermittelt wird. Ferner wird eine Eigengeschwindigkeit des Kraftfahrzeugs erfasst und/oder ermittelt. Hierzu wird bevorzugt zumindest ein zweiter Sensor des Kraftfahrzeugs eingesetzt, der dazu ausgebildet ist, Zustandsinformationen des Kraftfahrzeug zu erfassen. Beispielsweise wird ein Raddrehzahlsensor zum Bestimmen der Eigengeschwindigkeit des Kraftfahrzeugs verwendet. Alternativ wird die Eigengeschwindigkeit anhand der zeitlichen Änderung einer mittels eines GPS-Modules ermittelten Position des Kraftfahrzeugs ermittelt.

In dem erfindungsgemäßen Verfahren erfolgt ferner eine Vorsteuerung eines Dämpfersystems anhand des ermittelten Fahrbahnhöhenprofils, anhand des erfassten horizontalen Abstands, anhand der Eigengeschwindigkeit und eines zweites Fahrzeugmodell des Kraftfahrzeug. Insbesondere wird zunächst ein Zeitpunkt ermittelt, an dem das Kraftfahrzeug einen bestimmten Abschnitt des Fahrbahnhöhenprofils überfährt. Ferner wird das Dämpfersystem derart gesteuert, dass es zu diesem Zeitpunkt eine zu dem bestimmten Abschnitt des Fahrbahnhöhenprofils korrespondierende Einstellung aufweist. Bei dem Dämpfersystem handelt es sich bevorzugt um ein eingangs beschriebenes semiaktives Dämpfersystem und die Einstellung betrifft den Öffnungsgrad eines Verstellerventils und/oder die Viskosität eines Dämpfungsfluides.

Die konkrete Einstellung des Dämpfersystems erfolgt dabei hinsichtlich des bestimmten Abschnitts des Fahrbahnhöhenprofils indem hierfür ein (zweites) Fahrzeugmodell des Kraftfahrzeugs verwendet wird, bevorzugt ein dem Fabrikat, Modell oder Typ des Kraftfahrzeug entsprechendes Fahrzeugmodell. Erfindungsgemäß kann die Einstellung jedoch mit einem zeitlichem Vorlauf erfolgen. Bei dem vorgesteuerten Dämpfersystem handelt es sich bevorzugt um ein Dämpfersystem einer Fahrwerkskomponente. Ebenfalls bevorzugt handelt es sich um ein Dämpfungssystem eines Fahrerhauses oder eines Ladungslagerungssystems des Kraftfahrzeugs. Die Art des vorgesteuerten Dämpfungssystems wird dabei bevorzugt bei der Wahl des zumindest einen Fixpunktes berücksichtigt, wie im Folgenden im Detail erläutert wird.

In einer bevorzugten Durchführungsform des erfindungsgemäßen Verfahrens handelt es sich bei dem zumindest einen Fixpunkt des vorausfahrenden Fahrzeugs um zumindest einen Fixpunkt des Aufbaus des vorausfahrenden Fahrzeugs. Dies hat den Vorteil, dass das Verhalten des Fahrwerks oder eines Dämpfungssystems des vorausfahrenden Fahrzeugs im erfindungsgemäßen Verfahren nicht bekannt sein muss. Es reicht das Erfassen des Bewegungsverhaltens einer sichtbaren Komponente des vorausfahrenden Fahrzeugs, um das Vorsteuern eines Dämpfungssystems des Kraftfahrzeugs zu ermöglichen. Besonders bevorzugt handelt es sich bei dem Fixpunkt um einen Fixpunkt des Karosserieaufbaus, insbesondere sofern ein Dämpfungssystem des Fahrwerks vorgesteuert werden soll. Alternativ handelt es sich bei dem Fixpunkt um einen Fixpunkt des Fahrerhauses eines LKW, insbesondere sofern ein Dämpfungssystem des Fahrerhauses vorgesteuert werden soll. Alternativ handelt es sich bei dem Fixpunkt um einen Fixpunkt des Ladungslagerungssystems eines LKW, insbesondere sofern ein Dämpfungssystem des Ladungslagerungssystems vorgesteuert werden soll.

Besonders bevorzugt handelt es sich bei dem zumindest einen Fixpunkt des Aufbaus um zumindest ein, bevorzugt um zumindest zwei, Leuchtelement(e) des vorausfahrenden Fahrzeugs. Die Nutzung von Leuchtelementen als Fixpunkt(e) hat den Vorteil, dass diese auch bei Dunkelheit sehr gut zu erkennen und zu erfassen sind. Ferner befinden sich in der Regel zwei Leuchtelemente eines Paars von Leuchtelementen auf einer horizontalen Linie. Somit sind auch Wankbewegungen anhand eines solchen Paars von Leuchtelementen gut erfassbar. Ebenfalls bevorzugt handelt es sich bei dem zumindest einen Fixpunkt des Aufbaus um ein Nummernschild. Dies hat den Vorteil, dass ein Nummernschild am vorausfahrenden Fahrzeug vorhanden sein muss und dass die Größen weitgehend standardisiert sind. Ebenfalls bevorzugt handelt es sich bei dem zumindest einen Fixpunkt des Aufbaus um zumindest ein Auspuffendrohr des vorausfahrenden Fahrzeugs. Dies hat den Vorteil, dass Auspuffendrohre mittels Infrarotkamera unabhängig von der Sicht erfasst und erkannt werden können.

In einer ebenfalls bevorzugten Durchführungsform des erfindungsgemäßen Verfahrens erfolgt zunächst ein Erkennen zumindest eines vorbestimmten Fixpunkts des vorausfahrenden Fahrzeugs, wie beispielsweise eines Nummernschilds des vorausfahrenden Fahrzeugs. Dieses Erkennen umfasst dabei das Lokalisieren des erkannten Fixpunkts. In einem nächsten Schritt wird der erkannte Fixpunkt mit einem adaptiven Beleuchtungssystem angestrahlt, wobei das adaptive Beleuchtungssystem vorteilhaft die zielgenaue Ausleuchtung variabel einstellbarer Raumwinkelbereiche ermöglicht. Das adaptiven Beleuchtungssystem ist dabei bevorzugt gesondert oder als Teil einer (adaptiven) Frontbeleuchtung des Kraftfahrzeugs ausgebildet. Das zielgenaue Ausleuchten erfolgt dabei bevorzugt geregelt anhand der erfassten Trajektorie des zumindest einen erkannten Fixpunkts. Somit wird vorteilhaft das Kontrast-Rausch-Verhältnis beim Erfassen der Trajektorie des Fixpunkts und somit das Erfassen der Trajektorie des Fixpunkts selbst verbessert.

Ferner bevorzugt erfolgt im erfindungsgemäßen Verfahren ein Erfassen eines von dem Kraftfahrzeug überfahrenen Fahrbahnhöhenprofils mittels zumindest eines ersten Sensors des Kraftfahrzeugs. Die ersten Sensoren sind dabei zum Erfassen zumindest eines Umgebungssignals des Kraftfahrzeugs ausgebildet und umfassen beispielsweise eine Kamera und/oder Abstandssensoren. Ebenfalls bevorzugt erfolgt im erfindungsgemäßen Verfahren ein Erfassen eines von dem Kraftfahrzeug überfahrenen Fahrbahnhöhenprofils mittels zumindest eines zweiten Sensors des Kraftfahrzeugs. Die zweiten Sensoren sind dabei zum Erfassen zumindest eines Zustandssignals des Kraftfahrzeugs ausgebildet und umfassen beispielsweise Sensoren zum Messen der Eintauchtiefe der Dämpfer oder dergleichen. Gemäß dieser Durchführungsform erfolgt bevorzugt ein Vergleich des erfindungsgemäß mittels des inversen Modells ermittelten Fahrbahnhöhenprofils und des erfassten überfahrenen Fahrbahnhöhenprofils. Wird in diesem Vergleich eine Abweichung zwischen dem ermittelten Fahrbahnhöhenprofil und dem erfassten überfahrenen Fahrbahnhöhenprofil festgestellt, erfolgt bevorzugt ein Anpassen zumindest eines Parameters des inversen Fahrzeugmodells. Somit sind vorteilhaft eine Qualifizierung und Verbesserung des inversen Fahrzeugmodells möglich.

In einer ferner bevorzugten Durchführungsform des erfindungsgemäßen Verfahrens wird zumindest ein die Bewegung des Kraftfahrzeugs betreffender Sensorwert mittels der ersten Sensoren und/oder mittels der zweiten Sensoren erfasst und/oder ermittelt. Der Sensorwert ist dabei bevorzugt repräsentativ für Nick- und/oder Wankbewegungen des Fahrzeugs. Der Sensorwert kann die Bewegung des Kraftfahrzeugs dabei direkt oder indirekt beschreiben. Eine direkte Beschreibung der Bewegung des Kraftfahrzeugs kann beispielsweise anhand zweiter Sensorwerte zu Eintauchtiefen der Frontstoßdämpfer und/oder der Heckstoßdämpfer erfolgen. Eine indirekte Beschreibung der Bewegung des Kraftfahrzeugs kann beispielsweise anhand eines ersten Sensorwerts zur Position eines Umgebungsfixpunkts, beispielsweise eines Reflektors eines Begrenzungspfahls, Fahrbahnmarkierungen oder Verkehrsschildern erfolgen.

Anhand des zumindest einen die Bewegung des Kraftfahrzeugs betreffenden Sensorwerts wird ferner eine Trajektorie eines zum Erfassen des zumindest einen Fixpunkts genutzten Sensors ermittelt. Beschreibt der Sensorwert die Bewegung des Kraftfahrzeugs direkt, wird dabei vorzugsweise ein Fahrzeugmodell des Kraftfahrzeugs verwendet. Bei dem Fahrzeugmodell handelt es sich vorzugsweise um das Inverse des inversen Fahrzeugmodells. Bevorzugt handelt es sich jedoch um ein dem Fabrikat, Modell oder Typ des Kraftfahrzeugs entsprechendes Fahrzeugmodell. Anhand des Fahrzeugmodells kann beispielsweise anhand eines die Eintauchtiefen der Frontstoßdämpfer beschreibenden Sensorwerts die Sensortrajektorie einer im Fahrzeugdach integrierten Kamera ermittelt werden. Beschreibt der Sensorwert die Bewegung des Kraftfahrzeugs indirekt, beispielsweise als Bildsignal eines erkannten Umgebungsfixpunkts im selben Bildsignal, in dem sich auch der erfasste Fixpunkt des vorausfahrenden Fahrzeugs befindet, wird die Sensortrajektorie bevorzugt und vorteilhaft ohne Nutzung eines Fahrzeugmodells des Kraftfahrzeugs ermittelt.

Die Sensortrajektorie beschreibt beispielsweise die Zeitreihe der absoluten oder relativen Koordinaten einer für das Erfassen des zumindest einen Fixpunkts des vorausfahrenden Fahrzeugs genutzten Kamera. Anhand dieser Sensortrajektorie erfolgt ferner bevorzugt eine Korrektur der erfassten Trajektorie des zumindest einen Fixpunkts. Mit anderen Worten wird mittels dieser Korrektur sichergestellt, dass eine erfasste scheinbare Bewegung des Fixpunkts nicht auf einer Bewegung des zum Erfassen des Fixpunkts genutzten Sensors basiert.

Ferner bevorzugt umfasst eine Durchführungsform des erfindungsgemäßen Verfahrens das Erfassen von Längsbeschleunigungen des vorausfahrenden Fahrzeugs. Das Erfassen von Längsbeschleunigungen erfolgt dabei bevorzugt durch Korrelation eines zeitaufgelöst bestimmten Abstands zum vorausfahrenden Fahrzeug mit der Eigengeschwindigkeit des Kraftfahrzeugs. Anhand der erfassten Längsbeschleunigungen und des inversen Fahrzeugmodells werden dann Nickbewegungen des vorausfahrenden Fahrzeugs ermittelt. Ebenfalls bevorzugt werden Querbeschleunigungen des vorausfahrenden Fahrzeug erfasst. Dies erfolgt bevorzugt durch Abschätzung anhand von detektierten Kurven entlang der vor dem Kraftfahrzeug liegenden Fahrbahn oder alternativ anhand der erfassten Fixpunkte, wie beispielsweise zwei auf einer Horizontlinie angeordnete Rückleuchten. Anhand der erfassten Querbeschleunigungen und des inversen Fahrzeugmodells werden dann Wankbewegungen des vorausfahrenden Fahrzeugs ermittelt. Werden unmittelbar Wankbewegungen anhand der Fixpunkte erfasst, wird bevorzugt auf den Einsatz des inversen Fahrzeugmodells verzichtet. Anhand der ermittelten Nick- und/oder Wankbewegungen wird ferner bevorzugt die erfasste Trajektorie des zumindest einen Fixpunkts korrigiert, insbesondere bevor diese als Eingangssignal für das inverse Fahrzeugmodell verwendet wird. Somit kann vorteilhaft eine Verfälschung des im Verfahren ermittelten Fahrbahnprofils durch Bewegungen des Fahrzeugaufbaus aufgrund von Längs- oder Querbeschleunigungen vermieden werden.

Ferner bevorzugt wird im erfindungsgemäßen Verfahren eine Fahrzeugspur des vorausfahrenden Fahrzeugs erfasst und/oder ermittelt. Die Fahrzeugspur bezeichnet dabei die Summe der Kontaktpunkte der Reifen des vorausfahrenden Fahrzeugs mit der Fahrbahn während der Fahrt des vorausfahrenden Fahrzeugs. Mit dem erfindungsgemäßen Verfahren wird das Fahrbahnprofil anhand der Interaktion des vorausfahrenden Fahrzeugs mit einem Teil der Fahrbahn geschätzt. Insbesondere für diesen Teil der Fahrbahn ist das geschätzte Fahrbahnprofil somit besonders zutreffend geschätzt. Im erfindungsgemäßen Verfahren wird das Kraftfahrzeug daher besonders bevorzugt durch zumindest ein autonomes Fahrmanöver auf die erfasste Spur des vorausfahrenden Fahrzeugs gelenkt. Hierzu weist das Kraftfahrzeug bevorzugt ein zum autonomen Fahren eingerichtetes Fahrsystem wie unten beschrieben auf.

Ebenfalls bevorzugt erfolgt im erfindungsgemäßen Verfahren ferner das Senden des Fahrbahnhöhenprofils an ein anderes Fahrzeug oder einen Sever. Die Daten können somit anderen Verkehrsteilnehmern zur vorausschauenden adaptiven Fahrwerksregelung zur Verfügung gestellt werden. Alternativ und/oder zusätzlich erfolgt im erfindungsgemäßen Verfahren das Empfangen eines Fahrbahnhöhenprofils von einem anderen Fahrzeug oder von einem Server. Von einem oder mehreren anderen Fahrzeugen erfasste, geschätzte oder modellierte Fahrbahnhöhenprofile können somit vom Kraftfahrzeug vorteilhaft genutzt werden, um die vorausschauende adaptive Dämpferregelung zu verbessern oder zu validieren.

Besonders bevorzugt erfolgt eine adaptive Dämpferregelung dabei durch Vorsteuerung eines Dämpfungssystems anhand des im erfindungsgemäßen Verfahren ermittelten Fahrbahnhöhenprofils in Kombination mit von anderen Fahrzeugen und/oder Servern empfangenen Daten zur Dämpfervorsteuerung. Diese Daten enthalten dabei Fahrbahnhöhenprofile und/oder weitere die Dämpfervorsteuerung betreffende Informationen. Mit anderen Worten kann das erfindungsgemäße Verfahren vorteilhaft mit aus dem Stand der Technik bekannten Verfahren zur adaptiven Dämpfervorsteuerung kombiniert werden, die auf dem Empfang von relevanten Daten mittels Car2Car- oder Ca2X-Kommunikation basieren.

Die Verfahrensschritte des erfindungsgemäßen Verfahrens können durch elektrische oder elektronische Bauteile oder Komponenten (Hardware), durch Firmware (ASIC) implementiert sein oder durch beim Ausführen eines geeigneten Programms (Software) verwirklicht werden. Ebenfalls bevorzugt wird das erfindungsgemäße Verfahren durch eine Kombination von Hardware, Firmware und/oder Software verwirklicht, beziehungsweise implementiert. Beispielsweise sind einzelne Komponenten zum Durchführen einzelner Verfahrensschritte als separat integrierter Schaltkreis ausgebildet oder auf einem gemeinsamen integrierten Schaltkreis angeordnet. Einzelne zum Durchführen einzelner Verfahrensschritte eingerichtete Komponenten sind ferner bevorzugt auf einem (flexiblen) gedruckten Schaltungsträger (FPCB/PCB), einem Tape Carrier Package (TCP) oder einem anderen Substrat angeordnet.

Die einzelnen Verfahrensschritte des erfindungsgemäßen Verfahrens sind ferner bevorzugt als ein oder mehrere Prozesse ausgebildet, die auf einem oder mehreren Prozessoren in einem oder mehreren elektronischen Rechengeräten laufen und beim Ausführen von ein oder mehreren Computerprogrammen erzeugt werden. Die Rechengeräte sind dabei bevorzugt dazu ausgebildet, mit anderen Komponenten, beispielsweise einem Kommunikationsmodul sowie ein oder mehreren Sensoren beziehungsweise Kameras zusammenzuarbeiten, um die hierin beschriebenen Funktionalitäten zu verwirklichen. Die Anweisungen der Computerprogramme sind dabei bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen abgelegt sein.

Dem Fachmann ist ferner ersichtlich, dass die Funktionalitäten von mehreren Computern (Datenverarbeitungsgeräten) kombiniert oder in einem einzigen Gerät kombiniert sein können oder dass die Funktionalität von einem bestimmten Datenverarbeitungsgerät auf eine Vielzahl von Geräten verteilt vorliegen kann, um die Schritte des erfindungsgemäßen Verfahrens auszuführen, ohne vom erfindungsgemäßen Verfahren abzuweichen.

Ein weiterer Aspekt der Erfindung betrifft ein Kraftfahrzeug, insbesondere einen Personenkraftwagen mit Verbrennungs-, Elektro- oder Hybridmotor, welches zumindest einen zum Erfassen von Umgebungsdaten eingerichteten ersten Sensor, zumindest einen zum Erfassen von Fahrzeugdaten eingerichteten zweiten Sensor und ein Kommunikationsmodul, sowie ein zum autonomen Fahren des Kraftfahrzeugs eingerichtetes Fahrsystem aufweist. Das Kommunikationsmodul weist bevorzugt einen Funk-, Mobilfunk-, WLAN-, und/oder Bluetooth-Transceiver oder alternative Drahtloskommunikationsgeräte auf.

Der zumindest eine erste Sensor ist dabei dazu ausgebildet, die Umgebung des Fahrzeugs betreffende Sensorsignale zu erfassen. Der zumindest eine zweite Sensor ist dabei dazu ausgebildet, das Fahrzeug selbst betreffende Sensorsignale zu erfassen. Das Kommunikationsmodul ist dabei dazu ausgebildet, das Kraftfahrzeug und/oder dessen Umgebung potentiell betreffende Informationen über ein Kommunikationsnetzwerk zu empfangen. Dabei versetzt ein mittels des zumindest einen ersten Sensors empfangenes Umgebungssignal das parkende Kraftfahrzeug bevorzugt in die Lage, sich über seine Umwelt zu informieren und bildet bevorzugt eine Vielzahl von Umweltinformationen ab. Ein mittels des zumindest einen zweiten Sensors empfangenes Zustandssignal versetzt das parkende Kraftfahrzeug bevorzugt in die Lage, sich über seinen Eigenzustand zu informieren und bildet dazu eine Vielzahl von Zustandsinformationen ab. Ein mittels des Kommunikationsmodul empfangenes Signal ermöglicht den Empfang erster Bildsignale von einem mobilen Endgerät.

Ferner weist das Kraftfahrzeug eine zum Durchführen des oben beschriebenen erfindungsgemäßen Verfahrensausgebildete Steuereinheit auf. Die Steuereinheit ist insbesondere dafür eingerichtet, ein auf der Fahrspur des Kraftfahrzeugs vorausfahrendes Fahrzeug zu erkennen, eine Trajektorie zumindest eines Fixpunkts des vorausfahrenden Fahrzeugs zu erfassen und ein Fahrbahnhöhenprofil des vorausfahrenden Fahrzeugs anhand eines inversen Fahrzeugmodells und der erfassten Trajektorie des zumindest einen Fixpunkts zu ermitteln.

Gängige Kraftfahrzeuge weisen bereits heute eine Vielzahl von Sensoren auf, welche als erste Sensoren ständig verschiedene Umweltbedingungen, wie Außentemperatur, (Luft)Feuchtigkeit, etc. erfassen. Ferner können Fahrzeuge auch bereits zweite Sensoren, beispielsweise Lagesensoren einer Diebstahlwarnanlage, aufweisen. Moderne Fahrzeuge sind ferner mit leistungsfähigen Kommunikationsmodulen ausgestattet, die den Empfang von Informationen über eine Vielzahl von Kanälen ermöglichen. Das erfindungsgemäße Verfahren führt diese bereits vorhandenen Sensoren einer neuen vorteilhaften Verwendung zu.

Das Fahrsystem des erfindungsgemäßen Kraftfahrzeugs ist bevorzugt dafür eingerichtet, zumindest ein autonomes Fahrmanöver/eine autonome Fahrt von der Eigenposition des Fahrzeugs zu einer Zielposition beziehungsweise Parkposition durchzuführen. Besonders bevorzugt ist das Fahrsystem zur vollständig automatischen Führung des Kraftfahrzeugs ausgebildet und kann die Längsführung sowie die Querführung des Kraftfahrzeugs steuern. Ferner bevorzugt kann das Fahrsystem auf den zumindest einen ersten Sensor und/oder auf den zumindest einen zweiten Sensor zum Bestimmen von Zustandsinformationen und/oder von Umgebungsinformationen des Kraftfahrzeugs zugreifen. Diese ersten und zweiten Sensoren sind somit bevorzugt von dem Fahrsystem und von der Steuereinheit nutzbar.

Ein weiterer Aspekt der Erfindung betrifft eine Steuereinheit die dafür eingerichtet ist mit zumindest einem ersten Sensor zum Erfassen von Umgebungsdaten eines Kraftfahrzeugs, mit zumindest einem zweiten Sensor zum Erfassen von Zustandsdaten des Kraftfahrzeugs und mit einem Kommunikationsmodul eines Kraftfahrzeugs sowie mit einem Fahrsystem zum autonomen Fahren des Kraftfahrzeugs zu kommunizieren und die ferner dafür eingerichtet ist, das erfindungsgemäße Verfahren, wie obenstehend beschrieben, durchzuführen. Bevorzugte Ausgestaltungen der Steuereinheit entsprechen den obenstehend mit Bezug zu dem erfindungsgemäßen Kraftfahrzeug beschriebenen Ausführungsformen.

Ein weiterer Aspekt der Erfindung betrifft ein Verfahren einer Steuereinheit eines Kraftfahrzeugs, welches zumindest einen zum Erfassen von Umgebungsdaten eingerichteten ersten Sensor, zumindest einen zum Erfassen von Zustandsdaten des Kraftfahrzeugs eingerichteten zweiten Sensor und ein Kommunikationsmodul, ein zum autonomen Fahren des Kraftfahrzeugs eingerichtetes Fahrsystem sowie die Steuereinheit aufweist, wobei das Verfahren zumindest die folgenden Schritte umfasst: Erkennen eines auf der Fahrspur des Kraftfahrzeugs vorausfahrenden Fahrzeugs, Erfassen einer Trajektorie zumindest eines Fixpunkts des vorausfahrenden Fahrzeugs und Ermitteln eines Fahrbahnhöhenprofils anhand eines inversen Fahrzeugmodells und der erfassten Trajektorie des zumindest einen Fixpunkts des vorausfahrenden Fahrzeugs. Bevorzugte Ausgestaltungen des Verfahrens entsprechen den obenstehend mit Bezug zum erfindungsgemäßen Kraftfahrzeug beschriebenen Ausführungsformen.

Ein weiterer Aspekt der Erfindung betrifft ein Computerprogramm, umfassend Befehle, die bei der Ausführung des Programms durch einen Computer, wie beispielsweise eine Steuereinheit eines Kraftfahrzeugs, diesen veranlassen, das erfindungsgemäße Verfahren, umfassend die Schritte: Erkennen eines auf der Fahrspur des Kraftfahrzeugs vorausfahrenden Fahrzeugs, Erfassen einer Trajektorie zumindest eines Fixpunkts des vorausfahrenden Fahrzeugs und Ermitteln eines Fahrbahnhöhenprofils anhand eines inversen Fahrzeugmodells und der erfassten Trajektorie des zumindest einen Fixpunkts des vorausfahrenden Fahrzeugs, auszuführen. Bevorzugte Ausgestaltungen des Programms entsprechen den obenstehend mit Bezug zum erfindungsgemäßen Kraftfahrzeug beschriebenen Ausführungsformen.

Ein weiterer Aspekt der Erfindung betrifft ein computerlesbares Speichermedium, umfassend Befehle, die bei der Ausführung durch einen Computer, wie beispielsweise eine Steuereinheit eines Kraftfahrzeugs, diesen veranlassen, das erfindungsgemäße Verfahren, umfassend die Schritte: Erkennen eines auf der Fahrspur des Kraftfahrzeugs vorausfahrenden Fahrzeugs, Erfassen einer Trajektorie zumindest eines Fixpunkts des vorausfahrenden Fahrzeugs und Ermitteln eines Fahrbahnhöhenprofils anhand eines inversen Fahrzeugmodells und der erfassten Trajektorie des zumindest einen Fixpunkts des vorausfahrenden Fahrzeugs, auszuführen. Bevorzugte Ausgestaltungen des Speichermediums entsprechen den oben mit Bezug zum erfindungsgemäßen Kraftfahrzeug beschriebenen Ausführungsformen.

Weitere bevorzugte Ausgestaltungen der Erfindung ergeben sich aus den übrigen, in den Unteransprüchen genannten Merkmalen. Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines erfindungsgemäßen Kraftfahrzeugs gemäß einer Ausführungsform; und
- Figur 2: ein schematisches Ablaufdiagram des erfindungsgemäßen Verfahrens gemäß einer Durchführungsform.

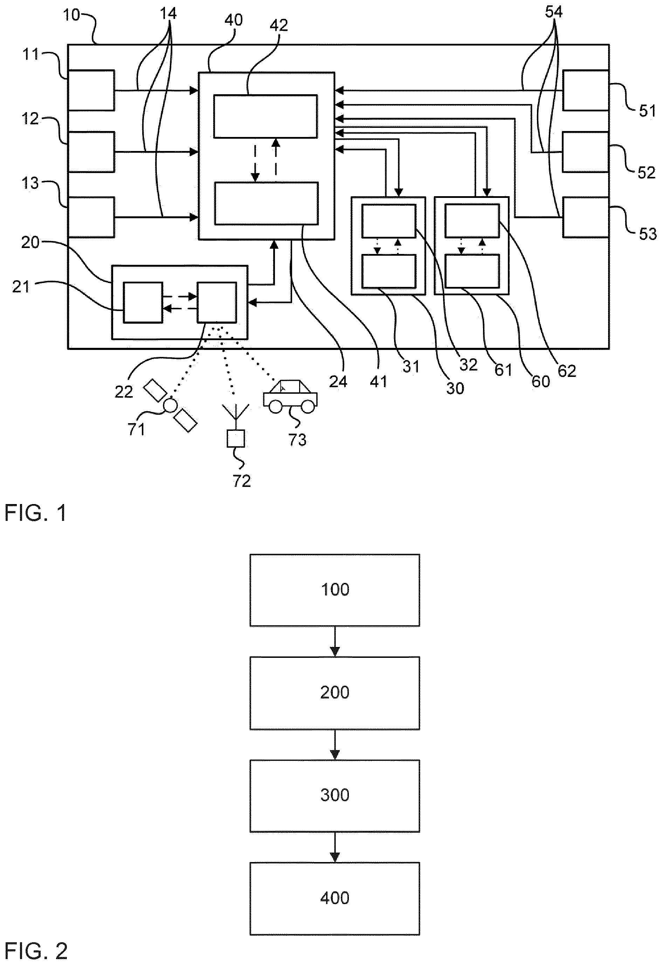

Figur 1 zeigt eine schematische Darstellung, insbesondere ein Blockdiagram eines Kraftfahrzeugs 10, insbesondere eines Kraftfahrzeugs mit Elektro- oder Hybridmotor.

Das Kraftfahrzeug 10 umfasst eine Vielzahl erster Sensoren, insbesondere einen ersten Sensor 11, einen zweiten Sensor 12, und einen dritten Sensor 13. Die ersten Sensoren 11, 12, 13 sind eingerichtet zum Erfassen von Umweltinformationen beziehungsweise Umgebungsdaten des Kraftfahrzeugs 10 und umfassen beispielsweise ein LIDAR-System oder andere Abstandssensoren wie beispielsweise Ultraschallsensoren zum Erfassen von Abständen zu das Kraftfahrzeug 10 umgebenden Objekten oder Personen, wobei der zweite Sensor 12 ein Infrarotsensor und der erste Sensor 11 eine Kamera 11 zum Erfassen eines Bildes einer das Fahrzeug 10 umgebenden Umwelt oder Personen ist. Die ersten Sensoren 11, 12, 13 übertragen die von ihnen erfassten Umgebungssignale an eine Steuereinheit 40 des Kraftfahrzeugs 10.

Das Kraftfahrzeug 10 weist ferner eine Vielzahl zweiter Sensoren, insbesondere einen vierten Sensor 51, einen fünften Sensor 52, und einen sechsten Sensor 53 auf. Bei den zweiten Sensoren 51, 52 ,53 handelt es sich um Sensoren zum Ermitteln von das Kraftfahrzeug 10 selbst betreffenden Zustandsdaten, wie beispielsweise aktuelle Lage- und Bewegungsinformationen des Kraftfahrzeugs. Bei den zweiten Sensoren handelt es sich folglich beispielsweise um Geschwindigkeitssensoren, Beschleunigungssensoren, Neigungssensoren, Innenraumbewegungsmeldern, Drucksensoren in den Fahrzeugsitzen oder dergleichen. Die zweiten Sensoren 51, 52, 53 übermitteln die von ihnen erfassten Zustandssignale an die Steuereinheit 40 des Kraftfahrzeugs 10.

Das Kraftfahrzeug 10 weist ferner ein Kommunikationsmodul 20 mit einem internen Speicher 21 und einem oder mehreren Transpondern beziehungsweise Sendeempfängern 22 auf. Bei den Transpondern 22 handelt es sich um Funk-, WLAN-, GPS- oder Bluetooth-Sendeempfängern oder dergleichen. Der Transponder 22 kommuniziert mit dem internen Speicher 21 des Kommunikationsmoduls 20, beispielsweise über einen geeigneten Datenbus. Mittels des Transponders 22 kann beispielsweise die aktuelle Position des Kraftfahrzeugs 10 durch Kommunikation mit einem GPS Satelliten 71 ermittelt und diese im internen Speicher 21 gespeichert werden. Das Kommunikationsmodul 20 kommuniziert mit der Steuereinheit 40. Das Kommunikationsmodul 20 ist ferner dafür eingerichtet, mit einem externen Server 72 eines Dienstanbieters und mit einem anderen Fahrzeug 73 zu kommunizieren. Beispielsweise ist das Kommunikationsmodul 20 dazu eingerichtet, über ein UMTS (Universal Mobile Telecommunication Service) oder LTE (Long Term Evolution) Mobilfunknetz zu kommunizieren.

Das Kraftfahrzeug 10 weist ferner das Fahrsystem 30 auf, das zum vollständig autonomen Fahrbetrieb, insbesondere zur Längs- und Querführung, des Kraftfahrzeugs 10 eingerichtet ist. Das Fahrsystem 30 weist eine CPU32 auf, das zum Berechnen von Routen zwischen einem Start- und einem Zielpunkt und zum Ermitteln der entlang dieser Route vom Kraftfahrzeug 10 durchzuführenden Manöver eingerichtet ist. Darüber hinaus umfasst das Fahrsystem 30 einen internen Speicher 31, beispielsweise für Kartenmaterialien, der mit dem Navigationsmodul 32 kommuniziert, beispielsweise über einen geeigneten Datenbus.

Zumindest ein Teil der zweiten Sensoren 51, 52, 53, des Kraftfahrzeugs 10 übermittelt seine Messergebnisse direkt an das Fahrsystem 30. Bei diesen unmittelbar an das Fahrsystem übermittelten Daten handelt es sich insbesondere um aktuelle Lage- und Bewegungsinformationen des Kraftfahrzeugs. Diese werden bevorzugt von Geschwindigkeitssensoren, Beschleunigungssensoren, Neigungssensoren, etc. erfasst.

Das Fahrzeug 10 weist ferner ein Dämpfungssystem 60, insbesondere ein adaptives Dämpfungssystem 60 auf. Das Dämpfungssystem 60 weist dabei insbesondere die Dämpfer 61 der Vorderachse und die Dämpfer 62 der Hinterachse auf. Jeder der Dämpfer 61, 62 des Dämpfungssystems 60 ist bevorzugt mit einem elektrisch regel- und/oder steuerbaren Verstellerventil ausgestattet. Der vom Dämpfungsfluid erfahrene Strömungswiderstand ist dadurch entsprechend von der Steuereinheit 40 empfangener Steuersignale einstellbar und somit sind die Kennlinien der Dämpfer 61, 62 über weite Bereiche anpassbar. Ferner übermittelt das Dämpfungssystem 60 Informationen an die Steuereinheit 40, beispielsweise über Eintauchtiefen der Dämpfer 61, 62.

Das Kraftfahrzeug 10 weist ferner eine erfindungsgemäße Steuereinheit 40 auf, welche zum Durchführen der erfindungsgemäßen Verfahren, wie im Folgenden im Detail erläutert, eingerichtet ist. Hierzu verfügt die Steuereinheit 40 über einen internen Speicher 41 und eine CPU 42, welche miteinander kommunizieren, beispielsweise über einen geeigneten Datenbus. Darüber hinaus steht die Steuereinheit in Kommunikationsverbindung mit zumindest den ersten Sensoren 11, 12, 13, den zweiten Sensoren 51, 52, 53, dem Kommunikationsmodul 20, dem Fahrsystem 30 und dem adaptiven Dämpfungssystem 60, beispielsweise über eine oder mehrere jeweilige CAN-Verbindungen, eine oder mehrere jeweilige SPI-Verbindungen oder andere geeignete Datenverbindungen.

Figur 2 zeigt ein schematisches Ablaufdiagram einer von der Steuereinheit 40 durchgeführten Durchführungsform des erfindungsgemäßen Verfahrens. Dabei wird in einem ersten Schritt S100 ein auf der Fahrspur des Kraftfahrzeugs 10 vorausfahrendes Fahrzeug erkannt, insbesondere mittels der Kamera 11 sowie der Steuereinheit 40. In einem weiteren Schritt S200 des erfindungsgemäßen Verfahrens wird eine Trajektorie zumindest eines Fixpunkts des vorausfahrenden Fahrzeugs erfasst, insbesondere mittels der Kamera 11 und/oder dem Infrarotsensor 12 sowie der Steuereinheit 40. Schließlich wird in einem dritten Schritt S300 des erfindungsgemäßen Verfahrens mittels der Steuereinheit 40 ein Fahrbahnhöhenprofil anhand eines inversen Fahrzeugmodells und der erfassten Trajektorie des zumindest einen Fixpunkts des vorausfahrenden Fahrzeugs ermittelt. Bevorzugt erfolgt in einem vierten Schritt S400 des erfindungsgemäßen Verfahrens eine Vorsteuerung des adaptiven Dämpfungssystems 60 anhand des ermittelten Fahrbahnhöhenprofils mittels der Steuereinheit 40.

### Bezugszeichenliste

- 10: Kraftfahrzeug

- 11: erster Sensoren (Kamera)
- 12: zweiter Sensor (Infrarotsensor)
- 13: dritter Sensor
- 14: Umgebungssignal

- 20: Kommunikationsmodul
- 21: Speicher
- 22: Transponder
- 24: Kommunikationssignal

- 30: Fahrsystem
- 31: Speicher
- 32: CPU

- 40: Steuereinheit
- 41: Speicher
- 42: CPU

- 51: vierter Sensoren
- 52: fünfter Sensor
- 53: sechster Sensor
- 54: Fahrzeugsignal

- 60: adaptives Dämpfersystem
- 61: Dämpfer Vorderachse
- 62: Dämpfer Hinterachse

- 71: Satellit
- 72: Server
- 73: anderes Fahrzeug

## Patentansprüche

1. Verfahren eines Kraftfahrzeugs (10) zum Ermitteln eines Fahrbahnprofils, aufweisend:
Erkennen eines auf der Fahrspur des Kraftfahrzeugs (10) vorausfahrenden Fahrzeugs;
Erfassen einer Trajektorie zumindest eines Fixpunkts des vorausfahrenden Fahrzeugs;
Auswahl eines inversen ersten Fahrzeugmodells anhand des erkannten vorausfahrenden Fahrzeugs;
Ermitteln eines Fahrbahnhöhenprofils anhand des inversen ersten Fahrzeugmodells und
der erfassten Trajektorie des zumindest einen Fixpunkts des vorausfahrenden Fahrzeugs;.
Erfassen eines horizontalen Abstands zu dem vorausfahrenden Fahrzeug und einer Eigengeschwindigkeit des Kraftfahrzeugs (10); und
Vorsteuerung eines Dämpfersystems (60) anhand des ermittelten Fahrbahnhöhenprofils, des erfassten horizontalen Abstands, der Eigengeschwindigkeit und eines zweiten Fahrzeugmodells des Kraftfahrzeugs (10).

2. Verfahren nach Anspruch 1, wobei der zumindest eine Fixpunkt des vorausfahrenden Fahrzeugs zumindest ein Fixpunkt des Aufbaus, bevorzugt zumindest ein Leuchtelement, des vorausfahrenden Fahrzeugs ist.

3. Verfahren nach einem der vorangehenden Ansprüche, ferner aufweisend:
Erfassen eines überfahrenen Fahrbahnhöhenprofils mittels zumindest eines ersten Sensors (11, 12, 13) und/oder zumindest eines zweiten Sensors (51, 52, 53) des Kraftfahrzeugs (10);
Vergleich des ermittelten Fahrbahnhöhenprofils und des erfassten überfahrenen Fahrbahnhöhenprofils; und
Anpassen zumindest eines Parameters des inversen Fahrzeugmodells anhand einer Abweichung zwischen dem ermittelten Fahrbahnhöhenprofil und dem erfassten überfahrenen Fahrbahnhöhenprofil.

4. Verfahren nach einem der vorangehenden Ansprüche, ferner aufweisend:
Erfassen zumindest eines die Bewegung des Kraftfahrzeugs (10) betreffenden Sensorwerts mittels erster Sensoren (11, 12, 13) und/oder zweiter Sensoren (51, 52, 53);
Ermitteln einer Sensortrajektorie eines zum Erfassen des zumindest einen Fixpunkts genutzten Sensors anhand des zumindest einen Sensorwerts;
Korrektur der erfassten Trajektorie des zumindest einen Fixpunkts anhand der Sensortrajektorie.

5. Verfahren nach einem der vorangehenden Ansprüche, ferner aufweisend:
Erfassen von Längs- und/oder Querbeschleunigungen des vorausfahrenden Fahrzeugs;
Ermitteln von Nickbewegungen des vorausfahrenden Fahrzeugs anhand der erfassten Längsbeschleunigungen und des inversen Fahrzeugmodells und/oder Ermitteln von Wankbewegungen des vorausfahrenden Fahrzeugs anhand der erfassten Querbeschleunigungen und des inversen Fahrzeugmodells;
Korrektur der erfassten Trajektorie anhand der ermittelten Nick- und/oder Wankbewegungen.

6. Verfahren nach einem der vorangehenden Ansprüche, ferner aufweisend:
Erfassen einer Fahrzeugspur des vorausfahrenden Fahrzeugs; und
Durchführen eines autonomen Fahrmanövers auf die erfasste Fahrzeugspur.

7. Verfahren nach einem der vorangehenden Ansprüche, ferner aufweisend:
Senden des Fahrbahnhöhenprofils an ein anderes Fahrzeug oder einen Sever; und/oder
Empfangen eines Fahrbahnhöhenprofils von einem anderen Fahrzeug oder einem Server.

8. Kraftfahrzeug (10), aufweisend zumindest einen zum Erfassen von Umgebungsdaten eingerichteten ersten Sensor (11, 12, 13), zumindest einen zum Erfassen von Fahrzeugdaten eingerichteten zweiten Sensor (51, 52, 53), ein Kommunikationsmodul (20), ein zum autonomen Fahren des Kraftfahrzeugs (10) eingerichtetes Fahrsystem (30) und eine zum Durchführen des Verfahrens nach einem der Ansprüche 1 bis 7 eingerichtete Steuereinheit (40).

## Claims

1. Method for a motor vehicle (10) for determining a roadway profile, including:
detecting a vehicle travelling in front on the lane of the motor vehicle (10);
detecting a trajectory of at least one fixed point on the vehicle travelling in front;
selecting an inverse first vehicle model by using the detected vehicle travelling in front;
determining a roadway height profile by using the inverse first vehicle model and
the detected trajectory of the at least one fixed point on the vehicle travelling in front;
detecting a horizontal distance to the vehicle travelling in front and an inherent speed of the motor vehicle (10); and
feedforward control of a shock absorber system (60) by using the determined roadway height profile, the detected horizontal distance, the inherent speed and a second vehicle model of the motor vehicle (10).

2. Method according to Claim 1, wherein the at least one fixed point on the vehicle travelling in front is at least one fixed point of the structure, preferably at least one lighting element, of the vehicle travelling in front.

3. Method according to one of the preceding claims, further including:
detecting a roadway height profile which is traversed by means of at least one first sensor (11, 12, 13) and/or at least one second sensor (51, 52, 53) of the motor vehicle (10);
comparing the determined roadway height profile and the detected traversed roadway height profile; and
adapting at least one parameter of the inverse vehicle model by using a deviation between the determined roadway height profile and the detected traversed roadway height profile.

4. Method according to one of the preceding claims, further including:
detecting at least one sensor value relating to the movement of the motor vehicle (10) by means of first sensors (11, 12, 13) and/or second sensors (51, 52, 53);
determining a sensor trajectory of a sensor used to detect the at least one fixed point by using the at least one sensor value;
correcting the detected trajectory of the at least one fixed point by using the sensor trajectory.

5. Method according to one of the preceding claims, further including:
detecting longitudinal and/or transverse accelerations of the vehicle travelling in front;
determining pitching movements of the vehicle travelling in front by using the detected longitudinal accelerations and the inverse vehicle model and/or determining rolling movements of the vehicle travelling in front by using the detected transverse accelerations and the inverse vehicle model;
correcting the detected trajectory by using the determined pitching and/or rolling movements.

6. Method according to one of the preceding claims, further including:
detecting a vehicle track of the vehicle travelling in front; and
carrying out an autonomous driving manoeuvre on the detected vehicle track.

7. Method according to one of the preceding claims, further including:
transmitting the roadway height profile to another vehicle or a server; and/or receiving a roadway height profile from another vehicle or a server.

8. Motor vehicle (10), having at least one first sensor (11, 12, 13) configured to detect data relating to the surroundings, at least one second sensor (51, 52, 53) configured to detect vehicle data, a communication module (20), a driving system (30) configured for the autonomous driving of the motor vehicle (10), and a control unit (40) configured to carry out the method according to one of Claims 1 to 7.

## Revendications

1. Procédé d'un véhicule automobile (10) permettant de déterminer un profil de chaussée, présentant :
la reconnaissance d'un véhicule qui précède sur la voie de circulation du véhicule automobile (10) ;
la détection d'une trajectoire d'au moins un point fixe du véhicule qui précède ;
la sélection d'un premier modèle de véhicule inverse à l'aide du véhicule qui précède reconnu ;
la détermination d'un profil de hauteur de la chaussée à l'aide du premier modèle de véhicule inverse et de la trajectoire détectée de l'au moins un point fixe du véhicule qui précède ;
la détection d'une distance horizontale par rapport au véhicule qui précède et d'une vitesse propre du véhicule automobile (10) ; et
la commande pilote d'un système d'amortissement (60) à l'aide du profil de hauteur de la chaussée déterminé, de la distance horizontale détectée, de la vitesse propre et d'un deuxième modèle de véhicule du véhicule automobile (10).

2. Procédé selon la revendication 1, dans lequel ledit au moins un point fixe du véhicule qui précède est au moins un point fixe de la superstructure, de préférence au moins un élément lumineux, du véhicule qui précède.

3. Procédé selon l'une quelconque des revendications précédentes, présentant en outre :
la détection d'un profil de hauteur de la chaussée parcouru, au moyen d'au moins un premier capteur (11, 12, 13) et/ou d'au moins un deuxième capteur (51, 52, 53) du véhicule automobile (10) ;
la comparaison du profil de hauteur de la chaussée déterminé et du profil de hauteur de la chaussée parcouru détecté ; et
l'adaptation d'au moins un paramètre du modèle de véhicule inverse à l'aide d'un écart entre le profil de hauteur de la chaussée déterminé et le profil de hauteur de la chaussée parcouru détecté.

4. Procédé selon l'une quelconque des revendications précédentes, présentant en outre :
la détection d'au moins une valeur de capteur concernant le déplacement du véhicule automobile (10) au moyen de premiers capteurs (11, 12, 13) et/ou de deuxièmes capteurs (51, 52, 53) ;
la détermination d'une trajectoire de capteur d'un capteur utilisé pour détecter ledit au moins un point fixe à l'aide de ladite au moins une valeur de capteur ;
la correction de la trajectoire détectée de l'au moins un point fixe à l'aide de la trajectoire de capteur.

5. Procédé selon l'une quelconque des revendications précédentes, présentant en outre :
la détection d'accélérations longitudinales et/ou transversales du véhicule qui précède ;
la détermination de mouvements de tangage du véhicule qui précède à l'aide des accélérations longitudinales détectées et du modèle de véhicule inverse, et/ou la détermination de mouvements de roulis du véhicule qui précède à l'aide des accélérations transversales détectées et du modèle de véhicule inverse ;
la correction de la trajectoire détectée à l'aide des mouvements de tangage et/ou de roulis déterminés.

6. Procédé selon l'une quelconque des revendications précédentes, présentant en outre :
la détection d'une voie de véhicule du véhicule qui précède ; et
l'exécution d'une manoeuvre de conduite autonome sur la voie de véhicule détectée.

7. Procédé selon l'une quelconque des revendications précédentes, présentant en outre :
l'envoi du profil de hauteur de la chaussée à un autre véhicule ou à un serveur ; et/ou
la réception d'un profil de hauteur de la chaussée d'un autre véhicule ou d'un serveur.

8. Véhicule automobile (10), présentant au moins un premier capteur (11, 12, 13) conçu pour détecter des données d'environnement, au moins un deuxième capteur (51, 52, 53) conçu pour détecter des données de véhicule, un module de communication (20), un système de conduite (30) conçu pour la conduite autonome du véhicule automobile (10) et une unité de commande (40) conçue pour exécuter le procédé selon l'une quelconque des revendications 1 à 7.
